(19) **Europäisches Patentamt / European Patent Office / Office européen des brevets**

(11) **EP 1 567 766 B1**

(12) # FASCICULE DE BREVET EUROPEEN

(45) Date de publication et mention
de la délivrance du brevet:
**10.02.2010 Bulletin 2010/06**

(51) Int Cl.:
*F02N 11/04* (2006.01)    *B60K 6/383* (2007.10)
*B60K 6/485* (2007.10)

(21) Numéro de dépôt: **03796118.2**

(22) Date de dépôt: **01.12.2003**

(86) Numéro de dépôt international:
**PCT/FR2003/003539**

(87) Numéro de publication internationale:
**WO 2004/053327 (24.06.2004 Gazette 2004/26)**

(54) **SYSTEME DE TRANSMISSION ASSOCIANT UN MOTEUR A COMBUSTION INTERNE ET UN ALTERNO-DEMARREUR**

ANTRIEBSSYSTEM FÜR VERBRENNUNGSMOTOR UND STARTER-GENERATOR

TRANSMISSION SYSTEM COMBINING AN INTERNAL COMBUSTION ENGINE AND AN ALTERNATOR-STARTER

(84) Etats contractants désignés:
**AT BE BG CH CY CZ DE DK EE ES FI FR GB GR HU IE IT LI LU MC NL PT RO SE SI SK TR**

(30) Priorité: **03.12.2002 FR 0215200**

(43) Date de publication de la demande:
**31.08.2005 Bulletin 2005/35**

(73) Titulaire: **HUTCHINSON**
**75008 Paris (FR)**

(72) Inventeur: **BRUNETIERE, Benoît**
**F-37000 Tours (FR)**

(74) Mandataire: **Jacquard, Philippe Jean-Luc**
**Cabinet ORES**
**36, rue de St Pétersbourg**
**75008 Paris (FR)**

(56) Documents cités:
**FR-A- 2 711 341      US-A1- 2002 117 860**
**US-A1- 2002 123 401**

## Description

La présente invention a pour objet un système de transmission dans lequel un moteur à combustion interne est couplé par l'intermédiaire d'un dispositif de transmission par lien souple, notamment du type à courroie, à un arbre d'un alterno-démarreur.

Il est de plus en plus envisagé de pouvoir démarrer un moteur thermique directement par l'alterno-démarreur faisant alors office de démarreur.

L'intérêt évident est de supprimer le dispositif de démarrage actuel (couronne lourde à forte inertie et démarreur électrique) et d'intégrer cette fonction directement à l'alterno-démarreur.

L'alterno-démarreur doit être adapté en terme de puissance à cette nouvelle fonction, mais le bilan économique reste positif.

En démarrage, le vilebrequin se comporte comme un frein, c'est l'alterno-démarreur qui est moteur. Le couple moteur est celui donné par l'alterno-démarreur.

En mode démarré, le vilebrequin est moteur alors que l'alterno-démarreur agit comme un frein. Le couple moteur est donné par le vilebrequin.

Toutefois, lorsque le couple nécessaire au démarrage du moteur est très important (par exemple couple supérieur à 90 N.m et par exemple compris entre 250 N.m et 280 N.m), le couple maximum donné par les alterno-démarreurs actuellement connus nécessite un rapport de transmission de l'ordre de 5 à 6, ce qui fait que, lorsque le moteur est démarré, ce rapport de réduction conduit à des vitesses de l'arbre de l'alterno-démarreur pouvant atteindre 36 000 tr/mn.

De ce fait, dans l'état actuel de la technique, un alterno-démarreur ne peut être mis en oeuvre que pour des moteurs de faible ou moyenne puissance, pour lesquels le couple de démarrage est inférieur à sensiblement 90 N.m.

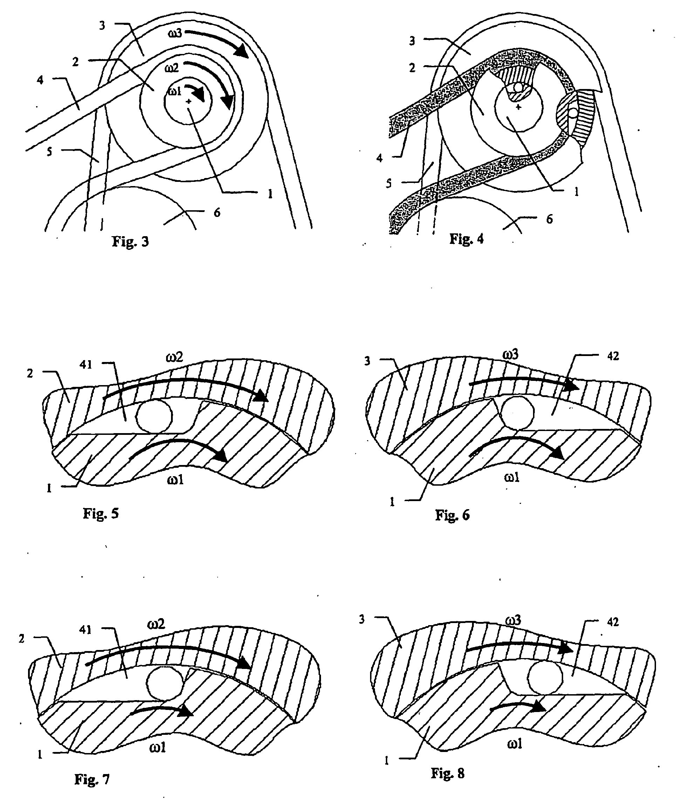

La Demande de Brevet Français FR 2 782 959 montrant les caractéristiques du préambule de la revendication 1 concerne un système de transmission dans lequel (Figure 4) l'axe 303 d'un moteur porte un dispositif de couplage à deux états permettant d'assurer par l'intermédiaire de deux courroies, deux rapports de transmission avec un arbre mené d'un alterno-démarreur (moteur électrique 8).

La Demande de Brevet FR 2 711 341 concerne une installation électrique complexe ayant trois modes de fonctionnement. Le premier mode utilise une machine électrique 1 comme générateur pour réseau de bord et le deuxième mode pour alimenter un appareil 8, avec un rapport de transmission différent dans les deux modes. Dans le troisième mode, la machine électrique 1 est utilisée comme démarreur.

La présente invention a pour objet un système de transmission permettant d'associer un moteur à combustion interne à fort couple de démarrage et un alterno-démarreur ou bien qui permette, pour des moteurs à faible ou moyenne puissance, de mettre en oeuvre un alterno-démarreur ayant un couple de démarrage réduit.

L'invention concerne ainsi un système de transmission dans lequel l'arbre d'un moteur à combustion est couplé par l'intermédiaire d'un dispositif de transmission par lien souple, notamment du type à courroie, à un arbre d'un alterno-démarreur, tel que défini dans la revendication 1.

Le dispositif de couplage comporte avantageusement un moyen de détection du sens du couple moteur pour placer le dispositif de couplage sélectivement dans son premier ou dans son deuxième état.

Des variantes de l'invention sont définies dans les revendications dépendantes.

D'autres caractéristiques et avantages de l'invention apparaîtront mieux à la lecture de la description ci-après, en liaison avec les dessins dans lesquels :

- les figures 1A et 1B illustrent un premier système de transmission selon l'invention;
- les figures 2A et 2B illustrent un deuxième système de transmission selon l'invention;
- les figures 3 à 8 illustrent un système de transmission à deux roues libres montées en opposition, ne faisant pas partie de l'invention;
- les figures 9, et 10A à 10C illustrent suivant des coupes AA de la figure 9, la figure 10B étant une coupe partielle, un système sélecteur à garnitures de friction selon l'invention;
- la figure 11 illustre un système selon l'invention, dans lequel le couplage de puissance s'effectue par crabots, alors que le pilotage met en oeuvre une garniture de friction;
- les figures 12 et 13 illustrent un système selon l'invention, dans lequel le pilotage s'effectue à l'aide d'au moins un élément déformable;
- les figures 14 et 15 illustrent une mise en oeuvre de l'invention, dans lequel le pilotage s'effectue par couplage magnétique et déplacement axial, le pilote étant mobile par rapport au sélecteur (figure 14) ou solidaire de celui-ci (figure 15);
- la figure 16 illustre une mise en oeuvre de l'invention selon laquelle le pilotage s'effectue par couplage magnétique périphérique;
- la figure 17 illustre une mise en oeuvre de l'invention selon laquelle le pilotage s'effectue par couplage périphérique par friction;

- les figures 18 à 20 illustrent une autre mise en oeuvre de l'invention pour un système de transmission (figure 18) qui est une variante de la figure 2A, les figures 19 et 20 étant respectivement des coupes AA et BB de la figure 18.

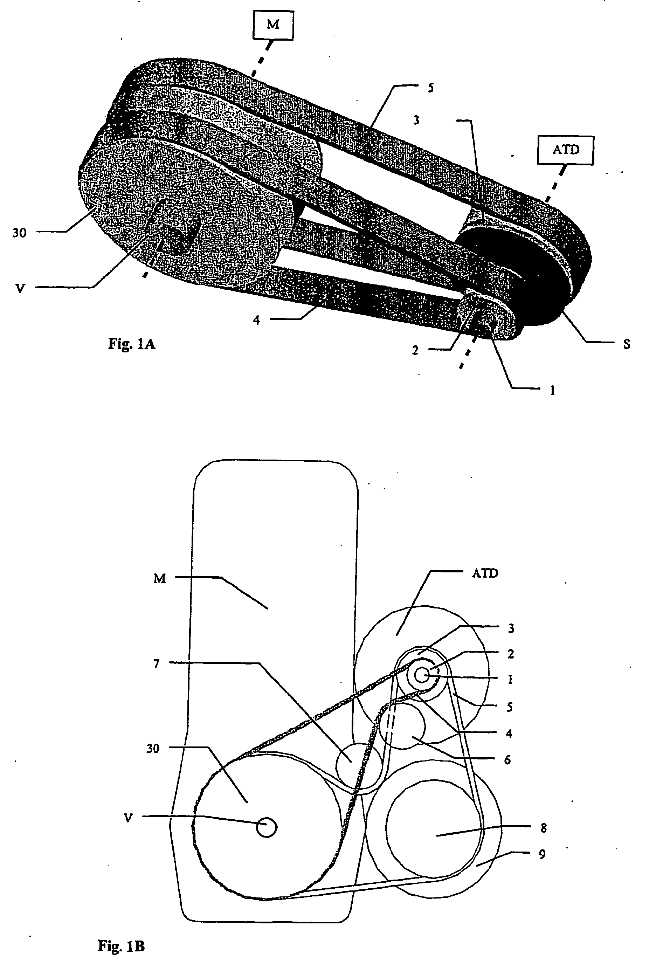

Le système représenté aux figures 1A et 1B comporte une double poulie 30 montée sur le vilebrequin V et deux poulies 2 et 3 de diamètres différents montées sur l'arbre 1 de l'alterno-démarreur ATD, l'ensemble étant relié par deux courroies 4 et 5.

Les deux poulies 2 et 3 sont libres en rotation par rapport à l'arbre 1 de l'alterno-démarreur ATD. Un sixième élément, le sélecteur S, monté sur l'arbre 1 de l'alterno-démarreur est limité en rotation par rapport à celui-ci. Le dit "sélecteur" réagissant en fonction du sens du couple, s'accouple avec l'une ou l'autre des poulies 2 ou 3 de manière automatique, pour obtenir deux rapports de transmission entre l'arbre 1 et le vilebrequin V.

Lors de la phase de démarrage, l'arbre 1 de l'alterno-démarreur est menant, et le sélecteur s'accouple avec la poulie 2. La poulie 2 entraîne alors le vilebrequin V par l'intermédiaire de la courroie 4, avec un rapport de transmission important. La poulie 3, qui n'est pas accouplée, n'influe pas sur le système.

Une fois le moteur démarré, le vilebrequin V devient menant. La courroie 5 entraîne la poulie 3 à une vitesse angulaire inférieure à celle de la poulie 2, de par la différence des diamètres. Le sélecteur s'accouple alors avec la poulie 3 avec un rapport de transmission moins élevé. La poulie 3 devient menante et entraîne l'alterno-démarreur ATD qui fait alors fonction d'alternateur. La poulie 2 n'étant plus accouplée à l'arbre 1, elle reste entraînée par la courroie 4, mais ne transmet plus de puissance à l'alterno-démarreur ATD.

On obtient ainsi un système de transmission à deux rapports de transmission dont le passage de l'un à l'autre se fait en fonction du sens du couple moteur, selon que celui-ci est généré par l'alterno-démarreur ATD ou par le moteur M.

Le moteur thermique M pourvu d'une poulie 30 en bout de vilebrequin V utilise ainsi l'alterno-démarreur ATD en tant que système de démarrage et en tant que générateur de courant une fois que le moteur M est démarré.

La transmission de puissance entre le moteur M et l'alterno-démarreur ATD est assurée en mode démarrage et en mode démarré par les liens souples 4 et 5 respectivement (notamment des courroies). Ils sont reliés d'une part, à la poulie 30 du vilebrequin V du moteur M, qui est une poulie double, et d'autre part, aux poulies 2 et 3 montées sur l'arbre 1 de l'alterno-démarreur ATD pour les liens souples 4 et 5 respectivement.

Cette liaison peut être réalisée par des mécanismes de transmission désolidarisables, montés en opposition entre l'arbre 1 et la poulie 2, ainsi qu'entre l'arbre 1 et la poulie 3, de manière à transmettre la puissance entre l'arbre 1 et la poulie 30 du vilebrequin V par l'intermédiaire de la poulie 2 et du lien souple 4 en mode démarrage, et transmettre la puissance entre la poulie 30 du vilebrequin V et l'arbre 1 par l'intermédiaire de la poulie 3 et du lien souple 5 en mode démarré (figures 3 et 4).

Il est possible de faire fonctionner différents accessoires par l'intermédiaire des liens souples 4 et 5. La figure 1B représente un exemple de cinématique où la poulie 8, entraînée par le lien souple 5, est accouplée à l'accessoire 9.

De même, les poulies 6 et 7 liées en rotation respectivement à la courroie 4 et à la courroie 5 peuvent entraîner des accessoires (non représentés sur la figure, par exemple la direction assistée, la climatisation, la pompe à eau, etc.), ou bien servir de mécanisme de mise en tension des liens souples 4 et 5.

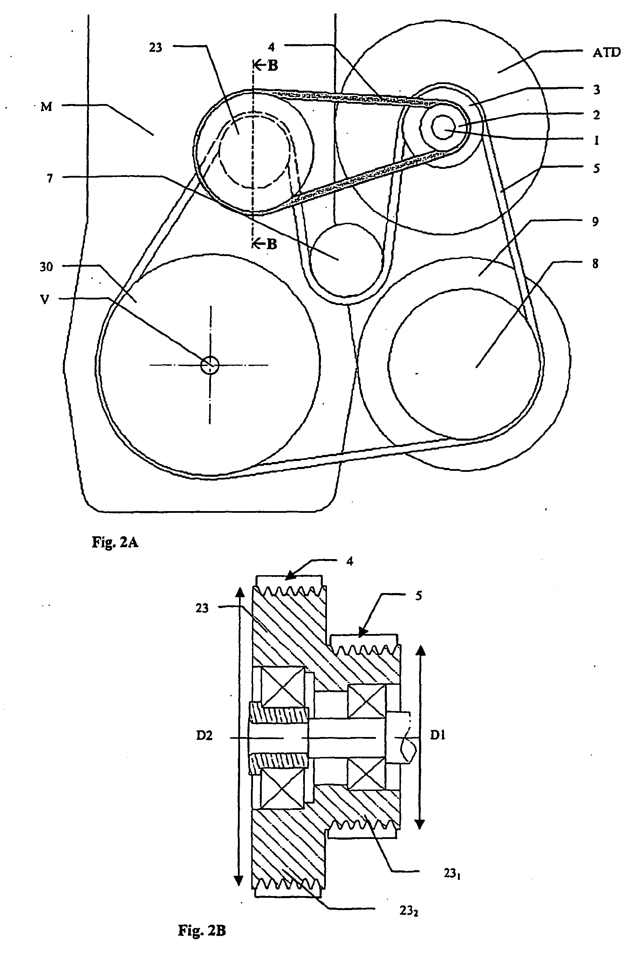

Dans une optique d'amélioration des solutions précédemment montrées (en utilisant un mécanisme de sélection de transmission sur l'arbre 1 de l'alterno-démarreur ATD), ainsi que dans un souci de modification minimale de la poulie 30 du vilebrequin V, il est possible d'utiliser (voir figures 2A et 2B) une poulie double intermédiaire 23. En effet, elle permet de transmettre la puissance de démarrage fournie par la poulie 2, par l'intermédiaire du lien souple 4 monté sur sa poulie $23_1$ de diamètre D1, à la poulie 30 du vilebrequin V, par l'intermédiaire du lien souple 5 monté sur sa poulie $23_2$ de diamètre D2.

Lors d'une utilisation de l'alterno-démarreur ATD en mode alternateur, la transmission de puissance entre la poulie 30 du vilebrequin V et la poulie 3 d'alterno-démarreur ATD s'effectue comme précédemment par l'intermédiaire du lien souple 5. La poulie double 23 se comporte alors comme une poulie folle.

Le rapport des diamètres entre D1 et D2 doit être tel qu'il soit possible de démarrer le moteur thermique M, tout en gardant des surfaces de contact suffisantes, au niveau des poulies 2 et 23 avec les liens souples 4 et 5.

Dans cette configuration, il est possible d'utiliser une poulie 30 classique pour le vilebrequin V. La poulie double 23 peut entraîner un accessoire. Chacun des deux liens souples 4 et 5 peut entraîner des accessoires (exemple : 9 par l'intermédiaire de la poulie 8), selon la vitesse de rotation nécessaire. La poulie 23 peut être montée sur un mécanisme de mise en tension du type tendeur, ou bien cette fonction peut être assurée directement par une courroie élastique. La poulie 7 peut être montée sur un mécanisme de mise en tension, cette hypothèse ayant pour intérêt d'avoir un mécanisme de mise sous tension du lien souple 5 (qui transmet la puissance à la poulie 30 du vilebrequin V) optimale quel que soit le mode de fonctionnement de l'alterno-démarreur ATD. En effet, lors du mode démarrage, la transmission de puissance a lieu de la poulie 23 vers la poulie 30 du vilebrequin V, et la poulie 7 servant d'élément tendeur se trouve sur un brin mou du lien souple 5 entre la poulie 23 et la poulie 2. Et en mode alternateur, la transmission de puissance a lieu de la poulie 30 du vilebrequin V vers la poulie 3 d'alterno-démarreur ATD par l'intermédiaire du lien souple 5, et la poulie 7 servant d'élément tendeur se trouve à un nouveau sur un brin mou du lien 5. Or, la position la plus favorable d'un élément tendeur pour maintenir sous tension un lien souple est de le placer sur un brin mou (par opposition à brin dur), comme dans les deux modes de fonctionnement présentés.

Les figures 3 à 8 illustrent un mode de réalisation dans lequel le couple moteur est détecté par des dispositifs 41 et 42 à roue libre montés en opposition entre l'arbre 1 (ou un prolongement de celui-ci) et respectivement les poulies 2 et 3.

Mode de fonctionnement démarreur (figures 5 et 6)

Le moteur thermique à l'arrêt, les poulies 2 et 3, reliées à la poulie 30 du vilebrequin V par l'intermédiaire des liens souples 4 et 5 respectivement, sont immobiles. Au moment de la mise sous tension de l'alterno-démarreur ATD, l'arbre 1 de l'alterno-démarreur ATD commence à tourner à une vitesse angulaire ω1. Le mécanisme de transmission de puissance 41 entre l'arbre 1 et la poulie 2 s'enclenche, de manière à solidariser l'arbre 1 et la poulie 2 (figure 5). Il y a transmission de puissance de l'arbre 1 vers la poulie 2. La poulie 2 tourne alors à une vitesse angulaire w2 = ω1. La poulie 2 entraîne en rotation la poulie 30 du vilebrequin V de rayon $R_v$ à une vitesse $\omega_v$ par l'intermédiaire du lien souple 4 pour lancer le moteur thermique. La poulie 30 du vilebrequin V, qui tourne à la vitesse angulaire $\omega_v$, étant aussi reliée à la poulie 3 par l'intermédiaire du lien souple 5, la poulie 3 est entraînée en rotation de la vitesse angulaire ω3.Le calcul de vitesse donne:

$$\omega_3 \times R_3 = \omega_v \times R_v \quad \text{et} \quad \omega_2 \times R_2 = \omega_v \times R_v \quad \text{donc} \quad \omega_3 = \omega_2 \times \frac{R_2}{R_3}$$

or $R_3 \rangle R_2$ donc

$$\omega_3 \langle \omega_2 = \omega_1$$

Le calcul montre donc que w3 est inférieur à ω1, ce qui fait que le mécanisme de transmission de puissance ne s'enclenche pas et laisse la poulie 3 désolidarisée de l'arbre 1. Il n'y a alors pas de transmission de puissance entre l'arbre 1 et la poulie 3 (figure 6).

Cas du mode de fonctionnement en alternateur (figures 7 et 8)

Le moteur thermique est démarré, la poulie 30 du vilebrequin V tourne à une vitesse angulaire $\omega_v$. Les poulies 2 et 3 sont entraînées à une vitesse w2 et w3 respectivement. L'alterno-démarreur ATD passe en mode alternateur, il n'est plus alimenté, et la vitesse ω1 tend à diminuer. Le mécanisme de transmission de puissance 41 entre l'arbre 1 et la poulie 2 les désolidarise. Il n'y a plus de transmission de puissance entre la poulie 2 et l'arbre 1 (figure 7). Au moment où la vitesse ω1 diminue au point d'être inférieure à la vitesse w3, le mécanisme de transmission de puissance 42 entre la poulie 3 et l'arbre 1 solidarise ces deux éléments. Il y a alors transmission de puissance entre la poulie 3 et l'arbre 1 (figure 8).

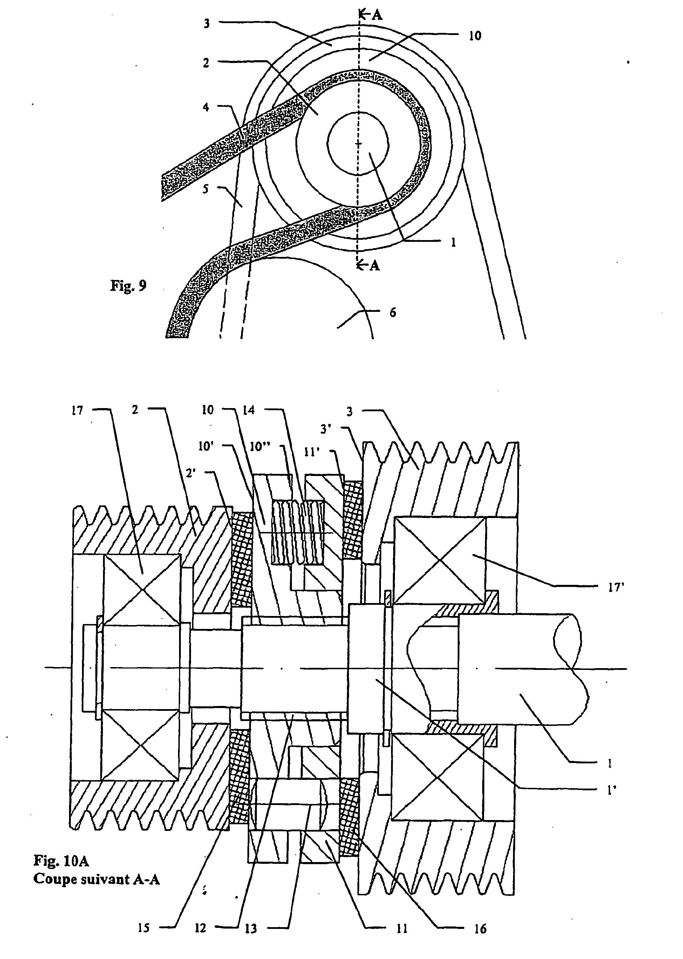

Le mode de réalisation ci-après met en oeuvre un mécanisme de sélection automatique 10 (voir figure 9) qui est disposé par exemple entre les flancs 2' et 3' des poulies 2 et 3 et qui permet d'assurer la transmission de puissance entre l'arbre 1 et la poulie 2 d'une part, et la poulie 3 et l'arbre 1 d'autre part, selon le mode de fonctionnement respectivement démarreur ou alternateur.

Utilisé comme élément de transmission intermédiaire, le sélecteur se déplaçant suivant l'axe de l'arbre 1 permet la transmission de puissance par l'utilisation d'une surface de friction, d'un mécanisme d'emboîtement, d'une transmission magnétique ou de tout autre système dont serait doté le sélecteur 10 pour transmettre du couple entre l'arbre 1 et les poulies 2 et 3.

Pour pouvoir fonctionner en parfaite autonomie, il faut que le système de sélection automatique puisse s'auto-piloter pour déterminer le mode de fonctionnement de l'alterno-démarreur ATD, ainsi que pour gérer les modes transitoires : passage du mode démarreur en mode alternateur et inversement.

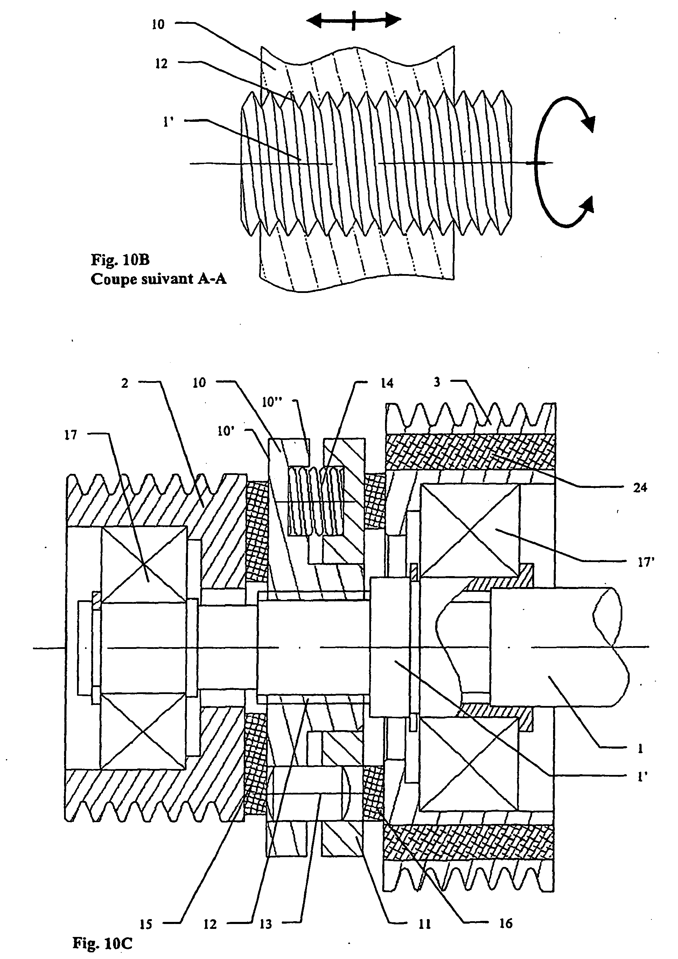

L'utilisation d'un système de guidage hélicoïdal 12 (par vis tel que représenté à la figure 10B ou chemin de came) du sélecteur 10 permet de détecter les changements de mode de fonctionnement, et par l'intermédiaire d'un élément pilote 11 solidaire ou non du sélecteur 10, notamment d'une face latérale 10" du sélecteur 10, de positionner le sélecteur au bon endroit pour transmettre la puissance entre l'arbre 1 et les poulies 2 ou 3 selon le mode de fonctionnement nécessaire. Le mécanisme de pilotage fournit le couple nécessaire au déblocage (s'il y a coincement) et au déplacement du sélecteur 10 sur son guidage hélicoïdal 12.

Mécanisme avec sélecteur à garniture de friction (figure 10A)

Les poulies 2 et 3 sont en liaison pivot avec l'arbre 1' par l'intermédiaire des paliers 17 et 17' respectivement.

Le mécanisme avec sélecteur à garnitures de friction se met dans la même position et dans des conditions similaires à celles du mécanisme représenté à la figure 4. Le sélecteur 10 est relié à l'arbre 1' qui est lui-même en liaison complète avec l'arbre 1 de l'alterno-démarreur ATD, par l'intermédiaire d'une liaison hélicoïdale 12. L'élément pilote 11 est limité à un déplacement axial par rapport au sélecteur 10 par l'intermédiaire des éléments de guidage 13. De part et d'autre de l'ensemble constitué par le sélecteur 10 et l'élément pilote 11, sont fixées des garnitures de friction 15 et 16 (sur les faces latérales respectivement 10' et 11' du sélecteur 10 et de l'élément pilote 11). Ces garnitures de friction 15 et 16 sont dimensionnées de manière à ce qu'il soit possible de transmettre le couple nécessaire entre les poulies 2 et 3 et l'arbre 1' en liaison complète avec l'arbre 1 par l'intermédiaire de l'ensemble sélecteur 10 et de l'élément pilote 11 quand l'effort presseur qui leur est appliqué est suffisant.

Le ou les éléments élastiques 14 (notamment des ressorts) créent un effort de pression de l'ensemble constitué par l'élément pilote 11 et la garniture de friction 16 sur le flanc 3' de la poulie 3, de manière à transmettre un couple minimum permanent sur l'élément pilote 11 nécessaire au bon déplacement du sélecteur 10 sur la liaison hélicoïdale 12 pour son positionnement correct suivant le mode de fonctionnement.

Mode de fonctionnement démarreur (figure 10A et 10B)

Le moteur thermique à l'arrêt, les poulies 2 et 3, reliées à la poulie 30 du vilebrequin V par l'intermédiaire des liens souples 4 et 5 respectivement, sont immobiles. Au moment de la mise sous tension de l'alterno-démarreur, l'arbre 1 de l'alterno-démarreur ATD ainsi que l'arbre 1' commencent à tourner. Le couple résistant exercé par l'élément pilote 11, lié à la poulie 3 par l'intermédiaire de la garniture de friction 16 soumise à la pression des éléments élastiques 14, maintient le sélecteur 10 fixe en rotation par rapport à la poulie 3, par l'intermédiaire des éléments de guidage 13. Du fait de la rotation de l'arbre 1, il y a alors déplacement axial du sélecteur 10 sur la liaison hélicoïdale 12 de l'arbre 1', jusqu'à ce qu'il rencontre la poulie 2 puis se coince entre le flanc 2' de la poulie 2 et la liaison hélicoïdale 12 pour finalement entraîner en rotation la poulie 2 à la même vitesse que l'arbre 1', solidaire de l'arbre 1, par l'intermédiaire de la garniture de friction 15 soumise à la pression de coincement. La poulie 2 étant entraînée en rotation à la même vitesse que l'arbre 1, il y a lancement puis démarrage du moteur thermique M par l'intermédiaire de la poulie 30 du vilebrequin V reliée à la poulie 2 par le lien souple 4.

Passage au mode de fonctionnement alternateur

Le moteur thermique est allumé, la poulie 30 du vilebrequin V tourne à une vitesse $\omega_V$. Les poulies 2 et 3 sont entraînées à une vitesse $\omega2$ et $\omega3$ respectivement. L'alterno-démarreur ATD passe en mode alternateur, il n'est plus alimenté, la vitesse $\omega1$ tend à diminuer alors que la vitesse $\omega2$ tend à rester constante, voire à augmenter : il y a alors décoincement de l'ensemble constitué par le sélecteur 10 et la garniture de friction 15 avec la poulie 2 et la liaison hélicoïdale 12 de l'arbre 1'. L'ensemble élément pilote 11 et garniture de friction 16 est toujours en contact avec la poulie 3, résultat de l'effort de pression des éléments élastiques 14. La vitesse $\omega3$ de la poulie 3 tendant à rester constante ou à augmenter, il y a glissement de l'arbre 1 ainsi que de l'ensemble mobile 10, 11, 15, 16 car on a $\omega2>\omega1>\omega3$ : la liaison hélicoïdale 12 ne permet pas l'embrayage du sélecteur 10 sur la poulie 2 car $\omega2>\omega1$, et pour la même raison, il n'y a pas embrayage du sélecteur 10 sur la poulie 3 car $\omega1>\omega3$. On a alors un glissement entre l'arbre 1 et les poulies 2 et 3. Au moment où la vitesse $\omega1$ de l'arbre 1 tend à devenir inférieure à la vitesse $\omega3$ de la poulie 3, l'ensemble constitué par l'élément pilote 11 et la garniture de friction 16 exercent alors un couple moteur sur le sélecteur 10 dont la vitesse est égale à celle de l'arbre 1, et il y a déplacement axial du sélecteur 10 vers la poulie 3, puis coincement de l'ensemble sélecteur 10, par l'intermédiaire de l'élément pilote 11 et de la garniture de friction 16, entre le flanc 3' de la poulie 3 et la liaison hélicoïdale 12 de l'arbre 1'. Dans ce cas, il y a transmission de puissance entre la poulie 3 et l'arbre 1 solidaire de l'arbre 1'.

Le mécanisme 12 assure donc la fonction suivante :

Lorsque le sélecteur 10 est limité en rotation (exemple : par l'intermédiaire des éléments de guidage 13 liés en rotation à l'élément pilote 11) et que l'arbre 1', solidaire de l'arbre 1 de l'alterno-démarreur ATD, tend à tourner à une vitesse différente de celui-ci, un déplacement axial du sélecteur 10 sur la liaison hélicoïdale 12 est généré par la rotation relative de l'arbre 1' par rapport au sélecteur 10. Il suffit pour cela que la différence de couple entre le sélecteur 10 et l'arbre 1' soit suffisamment élevée pour vaincre les efforts, en général peu importants, dus au frottement interne de la liaison hélicoïdale 12 représentée plus en détail à la figure 10B.

La figure 10C représente un mécanisme similaire à celui de la figure 10A avec l'intégration dans la poulie d'alternateur 3 d'un système de découplage 24 constitué par un ou plusieurs blocs 24 en élastomère, par exemple comme dans le Brevet FR 2 734 034 de la Société Demanderesse, ou dans le Brevet EP 12669. Un tel système peut aussi bien s'intégrer dans un autre élément tel que la poulie 2 à condition qu'il puisse remplir sa fonction de découplage en mode alternateur. Il peut être constitué d'un mécanisme existant connu ou nouveau.

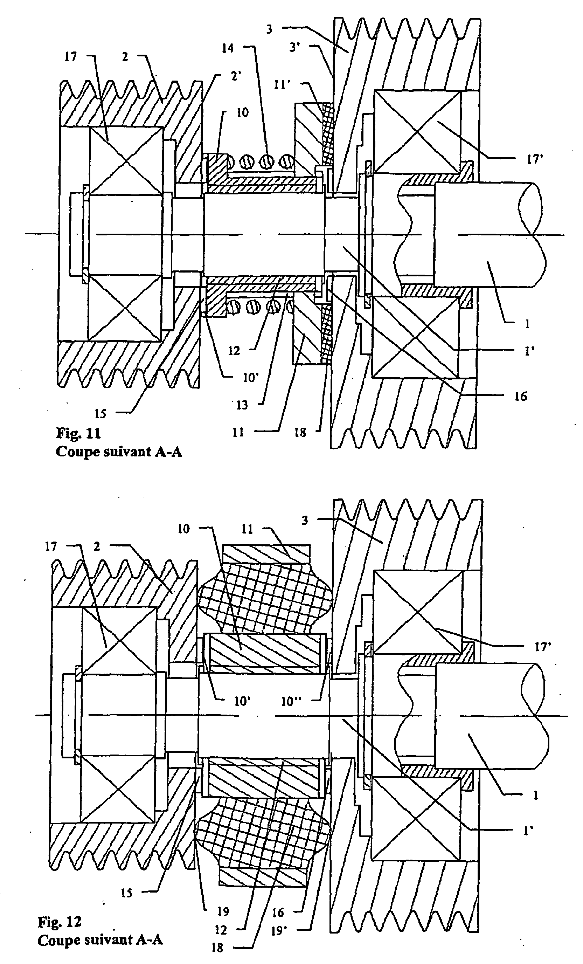

Le système présenté à la figure 11 est similaire à celui des figures 10A à 10C mais les éléments de transmission de puissance 15 et 16 sont disposés de part et d'autre du sélecteur 10. Ils peuvent être du type à friction ou du type crabot. L'élément de pilotage 11 présente une face 11' pourvu d'une garniture de friction 18 ayant pour rôle de fournir en permanence le couple nécessaire à l'élément de pilotage 11 pour déplacer axialement le sélecteur 10 sur la liaison hélicoïdale 12 par l'intermédiaire de l'élément de guidage 13. Les fonctions de transmission de puissance entre l'alterno-démarreur ATD et les poulies 2 et 3 ainsi que la transmission de couple minimal à l'élément pilote 11 ont ainsi été séparées.

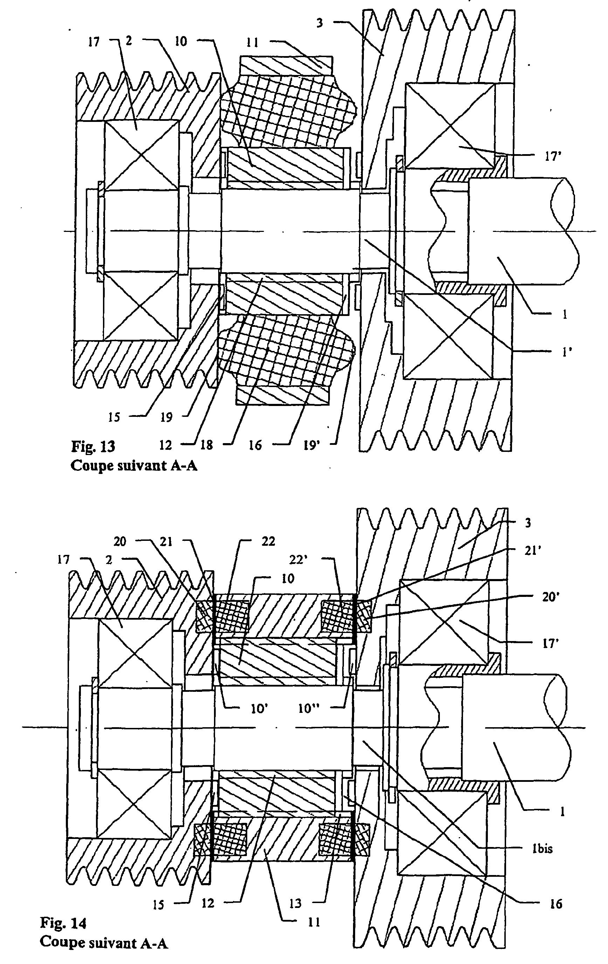

Le mécanisme présenté aux figures 12 et 13 intègre au sélecteur 10 un élément 18 (qui peut être en matière déformable du type élastomère, notamment en caoutchouc), qui par sa forme présente des surfaces de contact 19 et 19' avec les poulies 2 et 3. L'élément déformable 18 permet d'avoir, à chaque position du sélecteur 10, un contact, soit en 19, soit en 19', avec l'une ou l'autre des deux poulies 2 et 3 (voire les deux en même temps), de manière à obtenir un couple entre l'élément déformable 18 et les poulies 2 et 3, pour déplacer le sélecteur 10, solidaire de l'élément déformable 18, sur sa liaison hélicoïdale 12 le long de l'arbre 1', lié à l'arbre 1 de l'alterno-démarreur ATD selon le mode de fonctionnement.

Mode démarreur (figure 13)

Le fonctionnement du système présenté ici est similaire à celui des figures 10A à 10C, à la différence près qu'il n'y a pas de contact permanent entre l'élément élastique 18 et la poulie 3 en mode démarrage, cela évite des frottements inutiles.

Le contact 19 entre l'élément élastique 18 et la poulie 2 permet de fournir un couple suffisant au sélecteur 10, lorsque le moteur thermique M est démarré, la vitesse angulaire $\omega 1$ de l'arbre 1 devient inférieure à la vitesse $\omega 2$ de la poulie 2, pour désolidariser l'ensemble constitué par le sélecteur 10 et l'élément élastique 18 de la poulie 2.

Passage au mode alternateur

L'ensemble sélecteur 10 et élément élastique 18 désolidarisé de la poulie 2 est à nouveau en contact avec la poulie 3 par l'intermédiaire de l'élément élastique 18 au niveau de la surface de contact 19'. La poulie 3, tournant à une vitesse angulaire w3 supérieure à $\omega 1$, la vitesse de l'arbre 1 génère le déplacement du sélecteur 10 sur le guidage hélicoïdal 12, par frottement au niveau du contact 19'. L'ensemble sélecteur 10-élément élastique 18 se solidarise avec la poulie 3 pour permettre le passage de puissance avec l'arbre 1 par l'intermédiaire de l'élément de transmission de puissance 16.

La figure 14 illustre un mécanisme à pilotage magnétique. Ce mécanisme utilise un pilotage similaire à celui des figures 10A à 10C, mais en utilisant la force magnétique au lieu de la force de friction pour agir sur le mécanisme de sélecteur.

Le sélecteur 10 est en liaison hélicoïdale 12 avec l'arbre 1', solidaire de l'arbre 1 de l'alterno-démarreur ATD. L'élément pilote 11, en liaison glissière 13 avec le sélecteur 10, est pourvu d'éléments magnétiques 22 et 22' (qui peuvent être des aimants permanents multipolaires) à proximité des flancs des poulies 2 et 3 respectivement. De même, sont disposés en vis-à-vis des éléments magnétiques, sur les flancs des poulies 2 et 3, des éléments 20 et 20' (qui peuvent être en matériau à hystérésis) séparés par des entrefers 21 et 21' (qui peuvent être en matière magnétiquement isolante) pour les séparer des éléments magnétiques 20 et 20' respectivement. Cet ensemble magnétique 20 à 22 et 20' à 22' permet de donner à l'élément pilote 11 un couple moteur ou résistant selon le mode de fonctionnement pour qu'il fonctionne comme dans le cas présenté à la figure 12. En effet, un élément en matière à hystérésis, comme les éléments 20 et 20', soumis à un champ magnétique tournant crée un couple s'opposant au déplacement, ce qui correspond au fonctionnement équivalent de l'élément de friction 18 de la figure 12. Il est aussi nécessaire d'avoir un couple de pilotage suffisant pour permettre le déplacement du sélecteur 10 sur le guidage hélicoïdal 12.

Une variante de ce système consiste à n'utiliser qu'un seul ensemble de pilotage magnétique (20', 21' et 22', par exemple) qui génère un couple suffisant pour le pilotage.

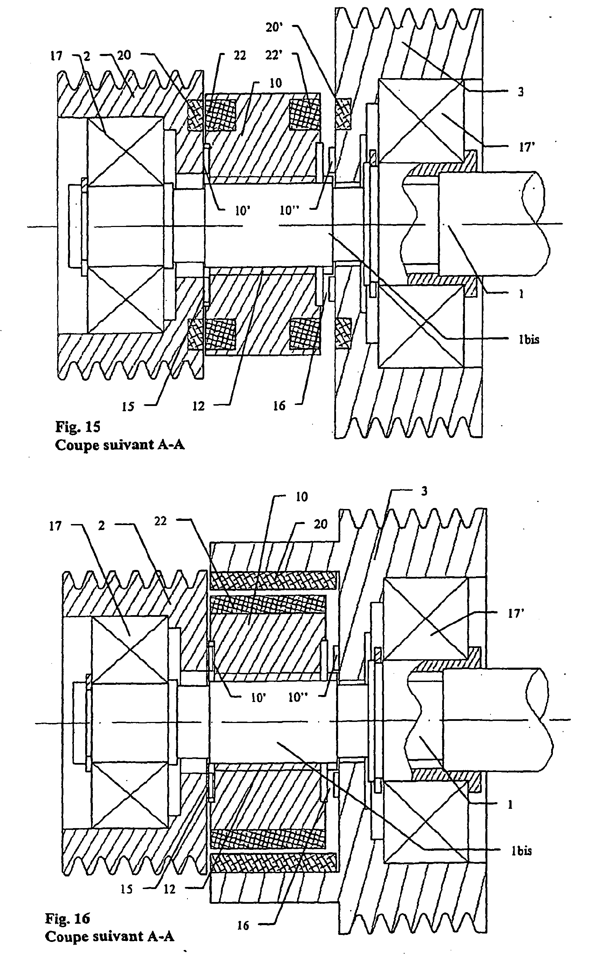

La figure 15 représente un mode de réalisation mettant en oeuvre un mécanisme à pilotage magnétique intégré. Le principe de fonctionnement de ce mécanisme est voisin du précédent (figure 14). La différence est qu'il n'y a pas d'élément pilote séparé et que les éléments magnétiques 22 et 22' sont intégrés au sélecteur 10. Dans ce cas, il n'est plus nécessaire d'utiliser des entrefers, puisque les éléments magnétiques 22 et 22' se déplacent avec le sélecteur 10. Les éléments magnétiques 22 et 22' ainsi que leurs vis-à-vis, les éléments 20 et 20' des poulies 2 et 3 respectivement, fournissent un couple de pilotage suffisant pour permettre le déplacement du sélecteur 10 sur sa liaison hélicoïdale 12 avec l'arbre 1' avec un entrefer variable.

Comme pour le système précédent, il est possible de n'utiliser qu'un seul ensemble magnétique (20' et 22' par exemple), pour générer les déplacements du sélecteur 10.

La figure 16 met en oeuvre un mécanisme de pilotage magnétique de forme générale cylindrique. Comme pour le mécanisme de la figure 15, le sélecteur 10 possède un élément magnétique 22 (qui peut être du type couronne aimantée multipolaire) sur sa périphérie extérieure avec pour vis-à-vis l'élément 20 (pouvant être en matière à hystérésis) solidaire de la poulie 3. L'intérêt d'un tel système par rapport au précédent est qu'il garde une distance d'entrefer constante, d'une part et que l'élément magnétique 22 voit toujours une surface équivalente à la sienne sur l'élément 20 situé en vis-à-vis. Dans cette configuration, le couple de pilotage, généré par l'ensemble magnétique 20 et 22, génère le déplacement du sélecteur sur le guidage hélicoïdal 12 selon le mode de fonctionnement (mode démarrage ou mode démarré).

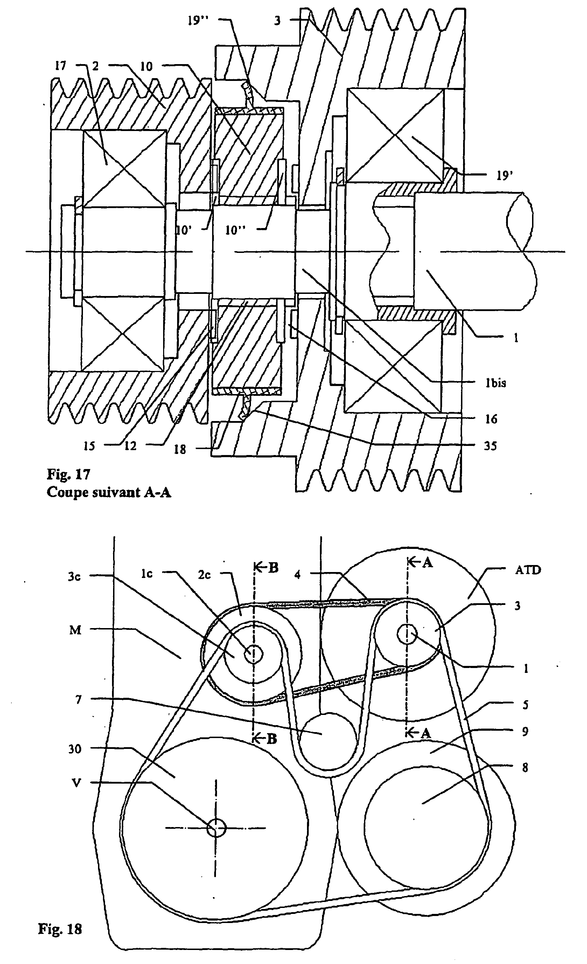

La figure 17 représente un mode de réalisation qui met en oeuvre un mécanisme avec sélecteur à contact périphérique. Le principe de fonctionnement de ce mécanisme est analogue à celui de la figure 16 mais en utilisant un élément de friction 18 plutôt qu'un ensemble magnétique. Un élément de friction annulaire 18, en matière déformable, par exemple en élastomère, est solidaire du sélecteur 10 et en contact par frottement avec la poulie 3 au niveau du contact 19" qui s'étend sur au moins une partie de la périphérie de l'élément 18. Le couple de friction généré en 19" permet le déplacement du sélecteur 10 selon le mode de fonctionnement. De plus, il peut être possible d'utiliser une surface de friction inclinée 35 de la poulie 3 de manière à limiter le frottement de l'élément 18 sur la poulie 3 en mode démarrage.

A la figure 18, le lien souple 5 (en premier plan) transmet la puissance entre la poulie 30 du vilebrequin V et les poulies 3 et 3c respectivement de l'alterno-démarreur ATD et d'un accessoire C (non représenté, repéré par son arbre 1c). De même, le lien souple 4 (en grisé) transmet la puissance entre les poulies 2 et 2c de l'alterno-démarreur ATD et de l'accessoire C respectivement. Sur les dessins, et pour une meilleure compréhension, les éléments du mécanisme montés sur l'accessoire C portent l'indice c.

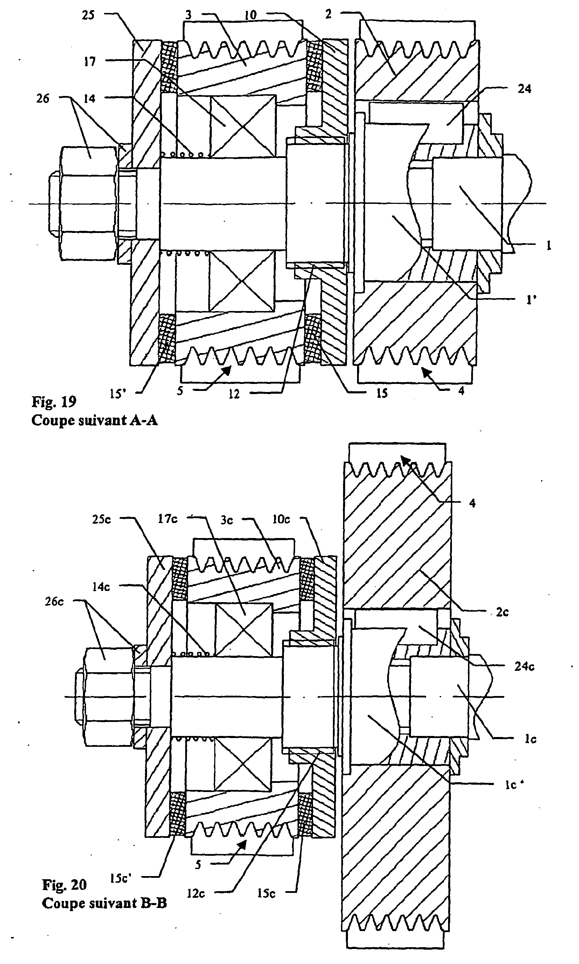

La solution proposée met en oeuvre deux poulies à sélecteur simplifié (représentées aux figures 19 et 20). Sur la base de la solution de la figure 2A, il est possible de simplifier le mécanisme de sélection automatique monté sur l'arbre 1 de l'alterno-démarreur ATD en utilisant deux mécanismes de sélection, l'un monté sur l'arbre 1 de l'alterno-démarreur ATD, et l'autre sur l'arbre 1c qui peut être l'arbre d'un accessoire C (non représenté sur la figure 18). Cette solution a l'avantage d'utiliser deux mécanismes de sélection quasi-similaires avec un nombre de pièces et un encombrement réduits. Dans cette configuration, l'arbre 1c de l'accessoire C tourne à une vitesse angulaire normale inférieure à celle de l'arbre 1 de l'alterno-démarreur ATD (ce qui est le cas dans la plupart des cinématiques de transmission actuelles).

Mode démarrage

Au niveau de l'alterno-démarreur ATD (figure 19).

Le moteur thermique M étant à l'arrêt, le vilebrequin V est immobile, l'alterno-démarreur ATD est moteur et l'arbre 1 commence à tourner. L'arbre 1', solidaire de l'arbre 1, entraîne en rotation la poulie 2 par l'intermédiaire du guidage 24.

L'élément élastique 14 exerce un léger effort presseur sur le palier 17 de la poulie 3 afin que celle-ci soit en contact avec la garniture de friction 15 solidaire du sélecteur 10. La poulie 3 peut alors se désolidariser partiellement l'ensemble sélecteur 10 et 15 sous l'action de son couple résistant, par l'intermédiaire du lien souple 5 solidaire de la poulie 30 du vilebrequin V, et du couple moteur de l'arbre 1' sur le sélecteur 10 par l'intermédiaire de la liaison hélicoïdale 12, associés à l'effort presseur fourni par l'élément élastique 14. Il y a alors glissement entre la poulie 3 et l'ensemble du sélecteur automatique monté sur l'arbre 1 de l'alterno-démarreur ATD.

Au niveau de l'accessoire C (figure 20), la poulie 2c est entraînée en rotation à une vitesse ω2c par l'intermédiaire du lien souple 4 proportionnellement à la vitesse w2 de la poulie 2 et à leurs rayons respectifs. On trouve alors par le calcul :

$$\omega_2 \times R_2 = \omega_{2c} \times R_{2c} \quad \text{donc} \quad \omega_{2c} = \omega_2 \times \frac{R_2}{R_{2c}} \quad \text{or } R_{2c} \rangle R_2 \quad \text{donc} \quad \omega_{2c} \langle \omega_2 = \omega_1$$

au rapport k près avec

$$k = \frac{R_2}{R_{2c}}$$

A la figure 20, les éléments homologues de ceux de la figure 19 portent les mêmes numéros de référence, avec ajout de l'indice c.

Le sélecteur automatique représenté figure 20 monté sur l'arbre 1c de l'accessoire C est similaire à celui monté sur l'arbre 1 de l'alterno-démarreur ATD à deux différences près :

- le diamètre de la poulie 2c est supérieur à celui de la poulie 2,
- le sens de la liaison hélicoïdale 12c est inversé par rapport à celui de la liaison hélicoïdale 12.

La deuxième différence citée ci-dessus a pour effet de faire fonctionner le sélecteur 10c en opposition avec le sélecteur 10. En effet, lorsque la poulie 2c transmet le couple de démarrage aux arbres 1c et 1'c par l'intermédiaire du guidage 24c, l'effort presseur de la poulie 3c, donné par l'élément élastique 14c, associé à son couple résistant, donné par le lien souple 5 solidaire de la poulie 30 du vilebrequin V, ont pour effet de déplacer l'ensemble sélecteur 10c et 15c au point de presser la poulie 3c contre la garniture de friction 15'c solidaire du flasque 25c immobilisé par rapport à l'arbre 1'c bis par l'ensemble écrou 26c.

On a alors solidarisation de la poulie 3c avec l'arbre 1'c, et avec l'ensemble du sélecteur automatique monté sur l'arbre 1c de l'accessoire C. Pour finir, il y a transmission du couple moteur de l'arbre 1'c à la poulie 30 du vilebrequin V. La poulie 3c, d'un diamètre similaire à celui des poulies 2 et 3 du sélecteur automatique monté sur l'arbre 1 de l'alterno-démarreur A, tourne à une vitesse $\omega 3c = w2c$ dépendant du rapport k : et qui est par conséquent inférieure à $\omega 1$. on a alors un couple C3c qui vaut :

$$C_{3c} = \frac{1}{k} \times C_{moteur}$$

le couple moteur étant dans ce mode celui de l'alterno-démarreur ATD. Dans ce cas, le couple transmis à la poulie 30 du vilebrequin V sera d'autant plus grand que k sera petit.

Dans cette configuration, la vitesse de rotation de l'accessoire C est proportionnelle au rapport k et elle est donc inférieure à la vitesse de rotation $\omega 1$ de l'arbre de l'alterno-démarreur ATD.

Mode alternateur

Le moteur thermique M est démarré, et il transmet le couple moteur à l'ensemble de la transmission. L'accessoire C et l'alterno-démarreur ATD sont des récepteurs, puisque le sens du couple est inversé.

Dans ce cas de figure les sélecteurs automatiques se trouvant sur les arbres 1 et 1c de l'alterno-démarreur ATD et de l'accessoire C (ou sur des prolongements de ceux-ci), fonctionnent à l'inverse du mode démarrage.

Au niveau de l'alterno-démarreur ATD (figure 19), la poulie 3, entraînée en rotation par le lien souple 5, exerce un effort presseur sur l'ensemble sélecteur 10 et 15, qui est dû à l'élément élastique 14, associé au couple résistant de l'arbre 1 de l'alterno-démarreur ATD sur la liaison hélicoïdale 12 entre l'arbre 1' et le sélecteur 10. Ce couple génère un déplacement axial du sélecteur 10 sur la liaison hélicoïdale 12 de manière à presser la poulie 3 contre la garniture de friction 15'. Le flasque 25, solidaire de la garniture de friction 15', étant immobilisé par rapport à l'arbre 1' par l'intermédiaire de l'ensemble écrou 26 permet avec l'ensemble sélecteur 10 et 15 de solidariser la poulie 3 avec l'arbre 1' et de transmettre la puissance de la poulie 30 du vilebrequin V à l'arbre 1 de l'alterno-démarreur ATD. De même, la poulie 2 solidaire de l'arbre 1' transmet la puissance à la poulie 2c de l'accessoire C par l'intermédiaire du lien souple 4.

Au niveau de l'accessoire C (figure 20), la poulie 3c, entraînée en rotation par le lien souple 5, exerce un couple moteur sur l'ensemble sélecteur 10c et 15c. Au même instant, l'arbre 1c exerce un couple résistant sur le sélecteur 10c, par l'intermédiaire de la liaison hélicoïdale 12c avec l'arbre 1'c. Il en résulte le déplacement axial du sélecteur 10c sur la liaison hélicoïdale 12c jusqu'à désolidarisation de la poulie 3c de l'ensemble sélecteur automatique monté sur l'arbre 1c de l'accessoire C. A ce stade, l'élément élastique 14c permet d'assurer la continuité du déplacement axial du sélecteur 10c au point de glissement maximum de la poulie 3c sur la garniture de friction 15c, solidaire du sélecteur 10c, ceci afin de limiter l'échauffement des pièces en contact.

Dans ce cas, la poulie 2c, solidaire de l'arbre 1'c, assure la transmission de puissance de la poulie 30 du vilebrequin V à l'accessoire C, par l'intermédiaire du lien souple 4 et de l'ensemble sélecteur automatique monté sur l'arbre 1 de l'alterno-démarreur ATD. Il est à noter que la vitesse de rotation $\omega 1c$ de l'axe 1c est proportionnelle au rapport k, elle est donc inférieure à la vitesse $\omega 1$ de l'alterno-démarreur ATD.

**Revendications**

1. Système de transmission dans lequel l'axe d'un moteur à combustion est couplé par l'intermédiaire d'un dispositif de transmission par liens souples, notamment du type à courroie, à un arbre d'un alterno-démarreur, lequel présente un dispositif de couplage à deux états, à savoir un premier état correspondant à une phase de démarrage du moteur, dans lequel l'arbre (1) de l'alterno-démarreur (ATD) entraîne le vilebrequin (V) du moteur (M) dans un premier rapport de transmission, et un deuxième état dans lequel le vilebrequin (V) du moteur (M) entraîne l'arbre (1) de l'alterno-démarreur (ATD) dans un deuxième rapport de transmission, le premier rapport de transmission étant supérieur au deuxième rapport de transmission, **caractérisé en ce que** le dispositif de couplage est disposé entre une première (2) et la deuxième (3) poulies et comporte au moins un élément de couplage (10) déplaçable longitudinalement parallèlement à l'axe dudit arbre entre deux positions correspondant respectivement au premier et au deuxième état de couplage, la première (2) et la deuxième (3) poulies étant coaxiales audit arbre (1), **en ce que** le dispositif de transmission présente un premier (4) et un deuxième (5) liens souples, notamment une courroie coopérant avec respectivement la première (2) et la deuxième (3) poulies et montés de manière à assurer lesdits premier et deuxième rapports de transmission, et **en ce que**, dans le premier état du dispositif de couplage, la première poulie (2) est couplée à l'arbre (1) de l'alterno-démarreur (ATD) pour assurer ledit premier rapport de transmission et dans le deuxième état du dispositif de couplage, la deuxième poulie (3) est couplée à l'arbre (1) de l'alterno-démarreur (ATD) pour assurer ledit deuxième rapport de transmission.

2. Système de transmission selon la revendication 1, **caractérisé en ce que** le dispositif de couplage comporte un moyen de détection du sens du couple moteur pour placer le dispositif de couplage sélectivement dans son premier ou dans son deuxième état.

3. Système selon une des revendications 1 ou 2, **caractérisé en ce que** le dispositif de couplage comporte un moyen assurant la mise du dispositif de couplage en son deuxième état lorsque la vitesse angulaire ($\omega$3) de l'arbre (1) devient inférieure à la vitesse angulaire ($\omega$3) de la deuxième poulie (3).

4. Système selon une des revendications 1 à 3, **caractérisé en ce que** la première poulie (2) a un diamètre inférieur à celui de la deuxième poulie (3).

5. Système selon une des revendications précédentes, **caractérisé en ce que** le premier (4) et le deuxième (5) liens souples sont montés entre respectivement la première (2) et la deuxième (3) poulies et les gorges d'une poulie (30) solidaire du vilebrequin (V) du moteur (M).

6. Système selon une des revendications 1 à 4, **caractérisé en ce que** le premier lien souple (4) est monté entre la première poulie (2) et une première gorge ($23_1$) d'une poulie intermédiaire double (23) dont la deuxième gorge ($23_2$) reçoit le deuxième lien souple (5) monté entre la deuxième poulie (3) et une gorge d'une poulie (30) solidaire du vilebrequin (V) du moteur (M).

7. Système selon la revendication 6, **caractérisé en ce que** ladite première gorge ($23_1$) a un diamètre supérieur à celui de ladite deuxième gorge ($23_2$).

8. Système selon une des revendications 6 ou 7, **caractérisé en ce qu'**il comporte un élément tendeur (7) disposé sur un brin du deuxième lien souple (5) entre la poulie intermédiaire (23) et la deuxième poulie (3), lequel est un brin mou aussi bien dans le premier état que dans le deuxième état.

9. Système selon une des revendications précédentes, **caractérisé en ce que** ledit élément de couplage déplaçable longitudinalement comporte un sélecteur (10) présentant une première liaison hélicoïdale (12), notamment un filetage ou un chemin de came hélicoïdal coopérant avec une deuxième liaison hélicoïdale (12) complémentaire solidaire de l'arbre (1) de l'alterno-démarreur (ATD) et au moins une face latérale (10', 10") portant un élément de transmission de puissance (15, 16), notamment une garniture de friction ou un crabot, et faisant face à un flanc (2', 3') d'une des première (2) et deuxième (3) poulies.

10. Système selon la revendication 9, **caractérisé en ce que** le sélecteur (10) présente une première face latérale (10') faisant face à un flanc (2') de la première poulie (2) et portant un premier élément de transmission de puissance (15), et une deuxième face latérale (10") portant un élément pilote (11) mobile en translation parallèlement à l'axe dudit arbre (1) et présentant une face d'extrémité dirigée vers un flanc (3') de la deuxième poulie (3) et portant un deuxième élément de transmission de puissance (16) constitué par une garniture de friction, et **en ce que** le sélecteur (10) porte au moins un élément de rappel élastique (14), tel qu'un ressort, qui exerce une force d'appui sur l'élément pilote (11) de sorte que ladite garniture de friction (16) appuie sur ledit flanc (3') de la deuxième (3) poulie.

11. Système selon la revendication 9, **caractérisé en ce que** le sélecteur (10) présente une première (10') et une deuxième (10") faces latérales faisant face à un flanc (2', 3') respectivement de la première (2) et de la deuxième (3) poulies et qui portent des éléments de puissance (15, 16), et **en ce qu'**il présente un élément pilote (11) mobile en translation longitudinale par rapport au sélecteur(10), parallèlement à l'axe dudit arbre(1, 1'), l'élément pilote (11) présentant une face latérale (11') tournée vers un flanc (3') de la deuxième poulie (3) et portant une garniture de friction (18), et **en ce que** le sélecteur (10) porte un élément de rappel élastique (14), tel qu'un ressort, qui exerce une force d'appui sur l'élément pilote (11), de sorte que ladite garniture de friction (18) de l'élément pilote (11) appuie sur ledit flanc (3') de la deuxième poulie (3).

12. Système selon la revendication 9, **caractérisé en ce que** le sélecteur présente une première (10') et une deuxième (10") faces latérales portant un élément de transmission de puissance (15, 16) et faisant face à un flanc (2', 3') respectivement de la première (2) et de la deuxième (3) poulies, et **en ce qu'**il présente un élément pilote (11) lié en rotation sélecteur (10) et qui, pour toute position longitudinale du sélecteur, génère un couple qui est fonction du déplacement angulaire relatif entre le sélecteur (10) et au moins une des première (2) et deuxième (3) poulies.

13. Système selon la revendication 12, **caractérisé en ce que** l'élément pilote (11) présente un élément élastiquement déformable (18) qui présente à ses extrémités longitudinales des régions déformables (19, 19') qui sont en contact respectivement avec ledit flanc (2') de la première poulie.(2) et avec ledit flanc (3') de la deuxième poulie (3) pour au moins une position longitudinale du sélecteur (10).

14. Système selon la revendication 12, **caractérisé en ce que** l'élément pilote (11) présente sur au moins une face latérale un élément magnétique (22, 22') en vis-à-vis d'un élément magnétique complémentaire (20, 20') porté par ledit flanc (2', 3') d'une des première (2) et la deuxième (3) poulies.

15. Système selon la revendication **12, caractérisé en ce que** le sélecteur (10) présente sur deux faces latérales opposées (10', 10") un élément de transmission de puissance (15, 16) faisant face pour l'un (15) à un flanc (2') de la première poulie (2), et pour l'autre (16) à un flanc (3') de la deuxième poulie (3) et **en ce que** le sélecteur (10) présente un élément magnétique annulaire (22) disposé à sa périphérie et situé en vis-à-vis d'un élément magnétique annulaire complémentaire (20) solidaire de la deuxième poulie (3).

16. Système selon la revendication **12, caractérisé en ce que** le sélecteur (10) présente un élément de friction (18), notamment déformable, qui est situé à sa périphérie et qui est en contact avec une région annulaire (19") de la deuxième poulie (3).

17. Système selon la revendication **9, caractérisé en ce que** le sélecteur (10) présente une première (10') et une deuxième (10") face latérales portant un élément de transmission de puissance (15, 16) et faisant face à un flanc (2', 3') respectivement de la première (2) et de la deuxième poulies (3), et **en ce qu'**il présente un élément pilote (11) mobile en translation par rapport au sélecteur (10) et présentant sur au moins une face latérale (11', 11") un élément magnétique (22', 22") en vis-à-vis d'un élément magnétique complémentaire (20, 20') porté par un flanc (2', 3') d'une des première (2) et deuxième (3) poulies.

18. Système selon une des revendications **6 à 8, caractérisé en ce que** le dispositif de couplage comporte un premier et un deuxième dispositifs de transmission de puissance désolidarisables montés pour agir en opposition, le premier étant monté coaxialement à la première poulie (2), et le deuxième étant monté coaxialement à la poulie intermédiaire double (23).

19. Système selon la revendication **18, caractérisé en ce que** lesdits premier et deuxième dispositifs de transmission désolidarisables présentent des liaisons hélicoïdales opérant dans des sens opposés pour faire fonctionner lesdits premier et deuxième dispositifs dans des sens opposés.

20. Système selon la revendication **18, caractérisé en ce que** lesdits premier et deuxième dispositifs de transmission désolidarisables comportent une roue libre.

**Claims**

1. Transmission system in which the shaft of a combustion engine is coupled via a transmission device using flexible links, particularly of the belt type, to a shaft of an alternator-starter, which system has a two-state coupling device, the states being a first state corresponding to a phase for starting the engine, in which the shaft (1) of the alternator-starter (ATD) drives the crankshaft (V) of the engine (M) with a first transmission ratio, and a second state in which the crankshaft (V) of the engine (M) drives the shaft (1) of the alternator-starter (ATD) with a second transmission ratio, the first transmission ratio being higher than the second transmission ratio, **characterized in that** the coupling device is arranged between a first (2) and the second (3) pulleys and comprises at least one coupling element (10) that can be moved longitudinally parallel to the axis of said shaft between two positions corresponding to the first and second coupling states respectively, the first (2) and the second (3) pulleys being coaxial with said shaft (1), **in that** the transmission device has a first (4) and a second (5) flexible link, particularly a belt collaborating with the first (2) and second (3) pulleys respectively and mounted in such a way as to afford said first and second transmission ratios, and **in that**, when the coupling device is in the first state, the first pulley (2) is coupled to the shaft (1) of the alternator-starter (ATD) to afford said first transmission ratio and, when the coupling device is in the second state, the second pulley (3) is coupled to the shaft (1) of the alternator-starter (ATD) to afford said second transmission ratio.

2. Transmission system according to Claim 1, **characterized in that** the coupling device comprises a means of detecting the direction of the driving torque so as to place the coupling device in its first or second state selectively.

3. System according to either of Claims 1 and 2, **characterized in that** the coupling device comprises a means placing the coupling device in its second state when the angular velocity ($\omega$3) of the shaft (1) drops below the angular velocity (w3) of the second pulley (3).

4. System according to one of Claims 1 to 3, **characterized in that** the first pulley (2) has a diameter smaller than that of the second pulley (3).

5. System according to one of the preceding claims, **characterized in that** the first (4) and second (5) flexible links are mounted between, respectively, the first (2) and second (3) pulleys and the grooves of a pulley (30) fastened to the crankshaft (V) of the engine (M).

6. System according to one of Claims 1 to 4, **characterized in that** the first flexible link (4) is mounted between the first pulley (2) and a first groove ($23_1$) of a double intermediate pulley (23) the second groove ($23_2$) of which receives the second flexible link (5) mounted between the second pulley (3) and a groove of a pulley (30) fastened to the crankshaft (V) of the engine (M).

7. System according to Claim 6, **characterized in that** said first groove ($23_1$) has a diameter greater than that of said second groove ($23_2$).

8. System according to either of Claims 6 and 7, **characterized in that** it comprises a tensioning element (7) arranged on a strand part of the second flexible link (5) between the intermediate pulley (23) and the second pulley (3), which strand part is slack both in the first state and in the second state.

9. System according to one of the preceding claims, **characterized in that** said longitudinally movable coupling element comprises a selector (10) exhibiting a first helical connection (12), particularly a screw thread or a helical cam path collaborating with a complementary secondary helical connection (12) fastened to the shaft (1) of the alternator-starter (ATD) and at least a lateral face (10', 10") bearing a power transmission element (15, 16), particularly a friction lining or a dog, and facing a flank (2', 3') of one of the first (2) and second (3) pulleys.

10. System according to Claim 9, **characterized in that** the selector (10) has a first lateral face (10') facing a flank (2') of the first pulley (2) and bearing a first power transmission element (15), and a second lateral face (10") bearing a control element (11) able to move in translation parallel to the axis of said shaft (1) and having an end face facing towards a flank (3') of the second pulley (3) and bearing a second power transmission element (16) consisting of a friction lining, and **in that** the selector (10) bears at least one elastic return element (14), such as a spring, which exerts a pressing force on the control element (11) so that said friction lining (16) presses against said flank (3') of the second (3) pulley.

11. System according to Claim 9, **characterized in that** the selector (10) has a first (10') and a second (10") lateral face facing a flank (2', 3') of the first (2) and second (3) pulleys respectively and which bear power elements (15, 16), and **in that** it has a control element (11) able to move in longitudinal translation with respect to the selector (10) parallel to the axis of said shaft (1, 1'), the control element (11) having a lateral face (11') facing towards a flank (3') of the second pulley (3) and bearing a friction lining (18), and **in that** the selector (10) bears an elastic return element (14), such as a spring, which exerts a pressing force on the control element (11) so that said friction lining (18) of the control element (11) presses against said flank (3') of the second pulley (3).

12. System according to Claim 9, **characterized in that** the selector has a first (10') and a second (10") lateral face bearing a power transmission element (15, 16) and facing a flank (2', 3') of the first (2) and second (3) pulleys respectively, and **in that** it has a control element (11) rotating as one with the selector (10) and which, for any longitudinal position of the selector, generates a torque which is dependent on the relative angular displacement between the selector (10) and at least one of the first (2) and second (3) pulleys.

13. System according to Claim 12, **characterized in that** the control element (11) has an elastically deformable element (18) which, at its longitudinal ends, has deformable regions (19, 19') which are in contact with said flank (2') of the first pulley (2) and said flank (3') of the second pulley (3), respectively, at least when the selector (10) is in one longitudinal position.

14. System according to Claim 12, **characterized in that** the control element (11) has, on at least one lateral face, a magnetic element (22, 22') facing a complementary magnetic element (20, 20') borne by said flank (2', 3') of one of the first (2) and second (3) pulleys.

15. System according to Claim 12, **characterized in that** the selector (10) has, on two opposite lateral faces (10', 10"), a power transmission element (15, 16), one of them (15) facing a flank (2') of the first pulley (2), and the other (16) facing a flank (3') of the second pulley (3) and **in that** the selector (10) has an annular magnetic element (22) arranged at its periphery and situated facing a complementary annular magnetic element (20) fastened to the second pulley (3).

16. System according to Claim 12, **characterized in that** the selector (10) has a friction element (18), particularly a deformable one, which is situated at its periphery and is in contact with an annular region (19") of the second pulley (3).

17. System according to Claim 9, **characterized in that** the selector (10) has a first (10') and a second (10") lateral face bearing a power transmission element (15, 16) and facing a flank (2', 3') of the first (2) and second (3) pulleys respectively, and **in that** it has a control element (11) able to move in translation with respect to the selector (10) and having, on at least one lateral face (11', 11"), a magnetic element (22', 22") facing a complementary magnetic element (20, 20') borne by a flank (2', 3') of one of the first (2) and second (3) pulleys.

18. System according to one of Claims 6 to 8, **characterized in that** the coupling device comprises a first and a second power transmission device that can be unfastened and that are mounted to act in opposition, the first being mounted coaxially with the first pulley (2) and the second being mounted coaxially with the double intermediate pulley (23).

19. System according to Claim 18, **characterized in that** said first and second unfastenable transmission devices have helical connections operating in opposite directions in order to cause said first and second devices to operate in opposite directions.

20. System according to Claim 18, **characterized in that** said first and second unfastenable transmission devices comprise a free wheel.

**Patentansprüche**

1. Übertragungssystem, bei welchem die Achse eines Verbrennungsmotors über eine Vorrichtung zur Übertragung durch flexible Verbindungsteile, insbesondere vom Riementyp, mit einer Welle eines Alterno-Anlassers gekoppelt ist, welcher eine Kopplungsvorrichtung mit zwei Zuständen aufweist, nämlich einem ersten Zustand, welcher einer Anlassphase des Motors entspricht, in welcher die Welle (1) des Alterno-Anlassers (ATD) die Kurbelwelle (V) des Motors (M) in einem ersten Übertragungsverhältnis antreibt, und einem zweiten Zustand, in welchem die Kurbelwelle (V) des Motors (M) die Welle (1) des Alterno-Anlassers (ATD) in einem zweiten Übertragungsverhältnis antreibt, wobei das erste Übertragungsverhältnis größer als das zweite Übertragungsverhältnis ist, **dadurch gekennzeich-**

**net, dass** die Kopplungsvorrichtung zwischen einer ersten (2) und der zweiten (3) Rolle angeordnet ist und wenigstens ein Kopplungselement (10) umfasst, welches longitudinal parallel zu der Achse der Welle zwischen zwei Positionen verschiebbar ist, welche dem ersten bzw. dem zweiten Kopplungszustand entsprechen, wobei die erste (2) und die zweite (3) Rolle koaxial mit der Welle (1) sind, dass die Übertragungsvorrichtung ein erstes (4) und ein zweites (5) flexibles Verbindungsteil aufweist, insbesondere einen Riemen, welches mit der ersten (2) bzw. der zweiten (3) Rolle zusammenwirkt und derart angebracht ist, dass das erste und das zweite Übertragungsverhältnis gewährleistet werden, und dass in dem ersten Zustand der Kopplungsvorrichtung die erste Rolle (2) mit der Welle (1) des Alterno-Anlassers (ATD) gekoppelt ist, um das erste Übertragungsverhältnis zu gewährleisten, und in dem zweiten Zustand der Kopplungsvorrichtung die zweite Rolle (3) mit der Welle (1) des Alterno-Anlassers (ATD) gekoppelt ist, um das zweite Übertragungsverhältnis zu gewährleisten.

2. Übertragungssystem nach Anspruch 1, **dadurch gekennzeichnet, dass** die Kopplungsvorrichtung ein Mittel zur Erfassung der Motordrehmomentrichtung umfasst, um die Kopplungsvorrichtung selektiv in ihren ersten oder in ihren zweiten Zustand zu versetzen.

3. System nach einem der Ansprüche 1 oder 2, **dadurch gekennzeichnet, dass** die Kopplungsvorrichtung ein Mittel umfasst, welches gewährleistet, dass die Kopplungsvorrichtung in ihren zweiten Zustand versetzt wird, wenn die Winkelgeschwindigkeit ($\omega 3$) der Welle (1) kleiner als die Winkelgeschwindigkeit ($\omega 3$) der zweiten Rolle (3) wird.

4. System nach einem der Ansprüche 1 bis 3, **dadurch gekennzeichnet, dass** die erste Rolle (2) einen Durchmesser aufweist, welcher kleiner ist als derjenige der zweiten Rolle (3).

5. System nach einem der vorhergehenden Ansprüche, **dadurch gekennzeichnet, dass** das erste (4) und das zweite (5) flexible Verbindungsteil angebracht ist zwischen der ersten (2) bzw. der zweiten (3) Rolle und den Kehlen einer Rolle (30), welche an der Kurbelwelle (V) des Motors (M) befestigt ist.

6. System nach einem der Ansprüche 1 bis 4, **dadurch gekennzeichnet, dass** das erste flexible Verbindungsteil (4) angebracht ist zwischen der ersten Rolle (2) und einer ersten Kehle ($23_1$) einer zwischenliegenden Doppelrolle (23), deren zweite Kehle ($23_2$) das zweite flexible Verbindungsteil (5) aufnimmt, welches angebracht ist zwischen der zweiten Rolle (3) und einer Kehle einer Rolle (30), welche an der Kurbelwelle (V) des Motors (M) befestigt ist.

7. System nach Anspruch 6, **dadurch gekennzeichnet, dass** die erste Kehle ($23_1$) einen Durchmesser aufweist, welcher größer ist als derjenige der zweiten Kehle ($23_2$).

8. System nach einem der Ansprüche 6 oder 7, **dadurch gekennzeichnet, dass** es ein Spannelement (7) umfasst, welches an einem Stück des zweiten flexiblen Verbindungsteils (5) zwischen der Zwischenrolle (23) und der zweiten Rolle (3) angeordnet ist, welches ein sowohl in dem ersten Zustand als auch in dem zweiten Zustand spannungsloses Stück ist.

9. System nach einem der vorhergehenden Ansprüche, **dadurch gekennzeichnet, dass** das longitudinal verschiebbare Kopplungselement eine Auswahlvorrichtung (10), welche eine erste schraubenartige Verbindung (12), insbesondere ein Gewinde oder eine schraubenartige Nockenbahn, aufweist, welche mit einer komplementären zweiten schraubenartigen Verbindung (12) zusammenwirkt, welche an der Welle (1) des Alterno-Anlassers (ATD) befestigt ist, und wenigstens eine Seitenfläche (10', 10''), welche ein Kraftübertragungselement (15, 16), insbesondere einen Reibungsbesatz oder eine formschlüssige Kupplung, trägt und einer Flanke (2', 3') von einer der ersten (2) und zweiten (3) Rolle zugewandt ist, umfasst.

10. System nach Anspruch 9, **dadurch gekennzeichnet, dass** die Auswahlvorrichtung (10) eine erste Seitenfläche (10'), welche einer Flanke (2') der ersten Rolle (2) zugewandt ist und ein erstes Kraftübertragungselement (15) trägt, und eine zweite Seitenfläche (10''), welche ein parallel zu der Achse der Welle (1) translationsbewegliches Steuerelement (11) trägt und eine Endfläche aufweist, welche in Richtung einer Flanke (3') der zweiten Rolle (3) gerichtet ist und durch einen Reibungsbesatz gebildetes zweites Kraftübertragungselement (16) trägt, aufweist, und dass die Auswahlvorrichtung (10) wenigstens ein elastisches Rückstellelement (14), wie z.B. eine Feder, trägt, welches eine Stützkraft auf das Steuerelement (11) ausübt, sodass der Reibungsbesatz (16) an der Flanke (3') der zweiten Rolle (3) anliegt.

11. System nach Anspruch 9, **dadurch gekennzeichnet, dass** die Auswahlvorrichtung (10) eine erste (10') und eine zweite (10'') Seitenfläche aufweist, welche einer Flanke (2', 3') der ersten (2) bzw. der zweiten (3) Rolle zugewandt sind und welche Kraftelemente (15, 16) tragen, und dass sie ein Steuerelement (11) aufweist, welches longitudinal im Verhältnis zu der Steuervorrichtung (10), parallel zu der Achse der Welle (1, 1') translationsbeweglich ist, wobei das Steuerelement (11) eine Seitenfläche (11') aufweist, welche in Richtung einer Flanke (3') der zweiten Rolle (3) gewandt ist und einen Reibungsbesatz (18) trägt, und dass die Auswahlvorrichtung (10) ein elastisches Rückstellelement (14), wie z.B. eine Feder, trägt, welches eine Stützkraft auf das Steuerelement (11) ausübt, sodass der Reibungsbesatz (18) des Steuerelements (11) an der Flanke (3') der zweiten Rolle (3) anliegt.

12. System nach Anspruch 9, **dadurch gekennzeichnet, dass** die Auswahlvorrichtung eine erste (10') und eine zweite (10'') Seitenfläche aufweist, welche ein Kraftübertragungselement (15, 16) trägt und einer Flanke (2', 3') der ersten (2) bzw. der zweiten (3) Rolle zugewandt ist, und dass sie ein Steuerelement (11) aufweist, welches drehbar mit der Auswahlvorrichtung (10) verbunden ist und welches, für jede longitudinale Position der Auswahlvorrichtung, ein Drehmoment erzeugt, welches eine Funktion der relativen Winkelverschiebung zwischen der Auswahlvorrichtung (10) und wenigstens einer von der ersten (2) und zweiten (3) Rolle ist.

13. System nach Anspruch 12, **dadurch gekennzeichnet, dass** das Steuerelement (11) ein elastisch verformbares Element (18) aufweist, welches an seinen longitudinalen Enden verformbare Bereiche (19, 19') aufweist, welche für wenigstens eine longitudinale Position der Auswahlvorrichtung (10) in Kontakt mit der Flanke (2') der ersten Rolle (2) bzw. mit der Flanke (3') der zweiten Rolle (3) stehen.

14. System nach Anspruch 12, **dadurch gekennzeichnet, dass** das Steuerelement (11) auf wenigstens einer Seitenfläche ein magnetisches Element (22, 22') aufweist, welches einem komplementären magnetischen Element (20, 20') gegenüberliegt, das von der Flanke (2', 3') von einer der ersten (2) und der zweiten (3) Rolle getragen ist.

15. System nach Anspruch 12, **dadurch gekennzeichnet, dass** die Auswahlvorrichtung (10) auf zwei gegenüberliegenden Seitenflächen (10', 10'') ein Kraftübertragungselement (15, 16) aufweist, von welchen das eine (15) einer Flanke (2') der ersten Rolle (2) und das andere (16) einer Flanke (3') der zweiten Rolle (3) zugewandt ist, und dass die Auswahlvorrichtung (10) ein ringförmiges magnetisches Element (22) aufweist, welches an ihrem Umfang angeordnet ist und sich gegenüber einem komplementären magnetischen ringförmigen Element (20) befindet, welches an der zweiten Rolle (3) befestigt ist.

16. System nach Anspruch 12, **dadurch gekennzeichnet, dass** die Auswahlvorrichtung (10) ein, insbesondere verformbares, Reibungselement (18) aufweist, welches sich an ihrem Umfang befindet und welches sich in Kontakt mit einem ringförmigen Bereich (19'') der zweiten Rolle (3) befindet.

17. System nach Anspruch 9, **dadurch gekennzeichnet, dass** die Auswahlvorrichtung (10) eine erste (10') und eine zweite (10'') Seitenfläche aufweist, welche ein Kraftübertragungselement (15, 16) trägt und einer Flanke (2', 3') der ersten (2) bzw. der zweiten (3) Rolle zugewandt ist, und dass sie ein Steuerelement (11) aufweist, welches im Verhältnis zu der Auswahlvorrichtung (10) translationsbeweglich ist und an wenigstens einer Seitenfläche (11', 11'') ein magnetisches Element (22', 22'') aufweist, welches gegenüber einem komplementären magnetischen Element (20, 20') liest, das von einer Flanke (2', 3') von einer der ersten (2) und zweiten (3) Rolle getragen ist.

18. System nach einem der Ansprüche 6 bis 8, **dadurch gekennzeichnet, dass** die Kopplungsvorrichtung eine erste und eine zweite Kraftübertragungsvorrichtung umfasst, welche abnehmbar angebracht sind, um gegeneinander zu wirken, wobei die erste koaxial mit der ersten Rolle (2) angebracht ist, und die zweite koaxial mit der Zwischendoppelrolle (23) angebracht ist.

19. System nach Anspruch 18, **dadurch gekennzeichnet, dass** die erste und zweite abnehmbare Vorrichtung schraubenartige Verbindungen aufweisen, welche in entgegengesetzter Richtung wirken, um die erste und zweite Vorrichtung in entgegengesetzten Richtungen arbeiten zu lassen.

20. System nach Anspruch 18, **dadurch gekennzeichnet, dass** die erste und zweite abnehmbare Übertragungsvorrichtung ein freilaufendes Rad umfassen.

Fig. 1A

Fig. 1B

Fig. 2A

Fig. 2B

EP 1 567 766 B1

Fig. 3

Fig. 4

Fig. 5

Fig. 6

Fig. 7

Fig. 8

**Fig. 9**

**Fig. 10A**
**Coupe suivant A-A**

**Fig. 10B**
**Coupe suivant A-A**

**Fig. 10C**

EP 1 567 766 B1

Fig. 11
Coupe suivant A-A

Fig. 12
Coupe suivant A-A

Fig. 13
Coupe suivant A-A

Fig. 14
Coupe suivant A-A

**Fig. 15**
**Coupe suivant A-A**

**Fig. 16**
**Coupe suivant A-A**

Fig. 17
Coupe suivant A-A

Fig. 18

Fig. 19
Coupe suivant A-A

Fig. 20
Coupe suivant B-B

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2782959
- FR 2711341
- FR 2734034
- EP 12669 A